# EUROPEAN PATENT APPLICATION

(11) **EP 2 544 023 A1**
(43) Date of publication of application: **09.01.2013**
(21) Application number: 12174618.4
(22) Date of filing: 02.07.2012
(51) Int. Cl.: G01S 19/09

(54) **Recording,storage and playback of GNSS signals**

(30) Priority: 04.07.2011 GB 201111305
(71) Applicant: Integrated Navigation Systems Limited, Northampton Northamptonshire NN7 4PS (GB)
(72) Inventor: Haddrell, Anthony, Rugby CV23 8TB (GB); Belton, David, Northants, NN5 6EW (GB)
(74) Representative: Mackenzie, Andrew Bryan

(57) **Abstract**

A radio receiver that implements downconversion of GNSS signals such as GPS/Galileo and GLONASS signals, in order to generate digital data bits at a low Intermediate Frequency or at baseband for recording/saving on digital storage media. A data interface able to accept additional data at the same time as the GNSS signal data is being recorded. A data combiner allowing data bits from the additional data stream to be inserted into the data samples being saved on the digital media. A replay function that reconstructs the additional data whilst replaying the GNSS data samples through a suitable upconverter to re-create the original GNSS signals, the additional data being provided on an external interface.

## Description

This invention relates to Global Navigation Satellite System (GNSS) receiver development and testing.

GNSS arrangements are multi-satellite based radio positioning systems. They consist of several orbiting satellites positioned in a "constellation" such that at least four satellites are observable by a user almost anywhere on the earth's surface. Several such global systems are in operation, such as GPS and GLONASS. Forthcoming alternatives include Galileo, COMPASS and various regional systems.

Typically, each satellite transmits signals in the spectrum between 1 GHz and 2GHz using spread spectrum techniques. The signals carry codes which contain data that enables a receiver to determine the distance between a broadcasting satellite and an antenna receiving the radio signals. This data contains satellite positioning data as well as data on clock timing; together called ephemeris data. Each satellite also transmits almanac data giving longer term, but less accurate, positional information about the whole constellation.

An antenna receives the satellite signals and a GNSS receiver converts the satellite signals into digital data. The receiver processes the digitized ephemeris data for a multiplicity of satellites to compute the location of the antenna receiving the ephemeris data.

To compute the location, the GNSS receiver typically performs two principle functions. Firstly, the receiver computes pseudo ranges to the various GNSS satellites and secondly, using trigonometry, the receiver computes the position of the antenna receiving the GPS signals using the pseudo ranges and the ephemeris data. Pseudo ranges are time delays measured between the received signal from each satellite and a local clock which give an indication of distance to the respective satellite.

The ability to record and subsequently replay GNSS signals is an important tool in the development and testing of such GNSS receivers. Traditional signal simulators are well established but lack the capability of generating the complex signals resulting from the many reflections and attenuation paths seen in "live" situations such as urban canyons and indoors.

This problem is discussed in US-A-6,114,989 (Trimble Navigation Limited), which discloses a GPS recorder arranged to record raw GPS signals (or an encoded form of those signals) to a computer hard disk or magnetic tape, for subsequent replay.

Recording such complex scenarios and storing them digitally allows the designer of a GNSS receiver to replay the same, live drive-around or static situation over and over again as algorithms are developed, system performance is improved, and mitigation techniques or extra features are introduced into the receiver.

Such recorders are available for GNSS signals, and have the added benefit of being lower cost than the traditional simulators. Thus such devices find favour in replaying less challenging signal sets for applications such as factory testing and performance evaluation. Recorded data is also useful as input to mathematical models.

It is often desirable to record other streaming data synchronously with the GNSS data to provide additional information for the test being conducted. Examples of such data are truth information (the true position at the time of recording generated by an inertial system, for instance), video information (so that the environment could be observed), automotive CAN BUS information and/or event markers such as start time, crossing a fixed position or landmarks, or a change in the recording environment or apparatus.

Because recording of GNSS signals requires high bandwidth storage, the resulting data files are typically packed very tightly to minimise file size, or alternately, to increase the recording time for a fixed size storage medium (Hard disk drive, flash card etc).

Recording additional data alongside the raw GNSS signals in a separate file is possible, but gives rise to replay problems when the "real time" aspect of replaying the raw data back is paramount. For most computer operating systems, this means concentrating on the raw GNSS data replay whilst additional files only get attention when processor time is available. Thus replaying two files in absolute time synchronism is difficult.

Accordingly, the invention addresses the problem of recording and/or playback of additional data in synchronism with GNSS raw signals.

In accordance with a first aspect of the invention there is provided a GNSS recorder comprising a radio receiver operable to downconvert a GNSS signal and to produce digital downconverted GNSS signal samples from the signal, storage means for storing the digital downconverted GNSS signal samples, a data interface operable to receive additional data at the same time as the digital downconverted GNSS signal samples are being stored in the storage means, and a data combiner operable to pack the additional data into redundant areas of the stream of digital downconverted GNSS signal samples before storage in the storage means.

In a second aspect, the invention provides a GNSS signal generator comprising storage means operable to contain digital downconverted GNSS signal samples written by the GNSS recorder of claim 1, a data decoder operable to decode digital downconverted GNSS signal samples written by the GNSS recorder of claim 1, an upconverter operable to generate radio frequency GNSS signals based on digital downconverted GNSS signal samples decoded by the data decoder, and an additional data output operable to output additional data decoded by the data decoder synchronously with a decoded GNSS signal.

Thus the recorder and signal generator are able to record raw GNSS signals from multiple satellites as seen by an antenna used during recording, in the form of digital downconverted GNSS signal samples. These can then be used to replay the original RF signal seen by the antenna, so that a GNSS receiver under test can carry out the steps of extracting the signals from different satellites, and extracting the almanac and ephemeris data as described above.

Thus the GNSS recorder does not need to decode the GNSS signals, but merely sample and record them at a sufficient rate and with sufficient quality that the signal generator is able to reproduce the recorded RF GNSS signal at useable quality. This downconversion is typically achieved by mixing the signal from an antenna connected to the recorder, down to an Intermediate Frequency or baseband, and then sampling it periodically with an Analogue-to-Digital Convertor. The reverse process may be used by the signal generator during upconversion. There is no need to use a correlator or to decode the data modulated in the GNSS signals.

The invention has the advantage of using redundancy contained within the stream of digital downconverted GNSS signal samples to store data bits for storage of the additional data and replacing these bits at GNSS replay with a appropriate dummy data bits which only marginally changes the performance of the recreated GNSS signals. Since the additional data is stored, in real-time, in the stream of digital downconverted GNSS signal samples itself, synchronicity is guaranteed.

This possibility comes about because the inventors have recognised that advantage can be taken of the noise-like characteristics of the spread-spectrum GNSS signals and the fact that they are themselves well below thermal noise. Thus the data bits stored from the raw GNSS signals represent a Gaussian noise signal until processed by a suitable receiver, which recovers the noise-like GNSS signals by knowing what they should look like and applying appropriate correlation techniques. However, since these signals are heavily contaminated by thermal noise, many of the data bits do not contribute to the end performance. Therefore on replay, some number of them can be artificially replaced with dummy bits, organised to preserve the noise characteristics of the overall signal, thus with little effect on the quality of the replay. By packing the data in the GNSS data stream, no additional storage overhead is introduced in the recorder and replay synchronicity is guaranteed.

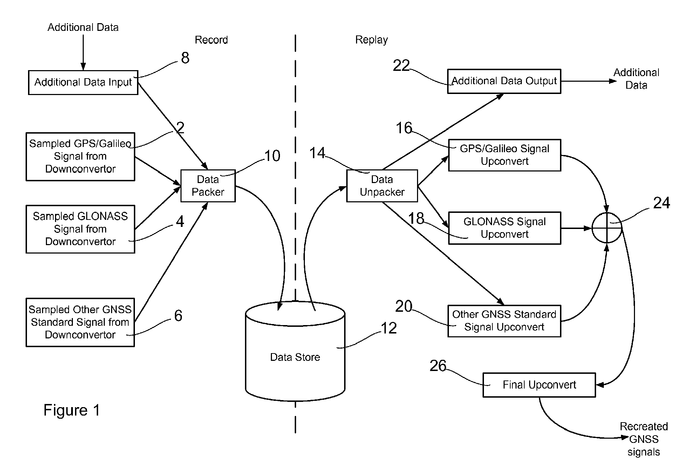

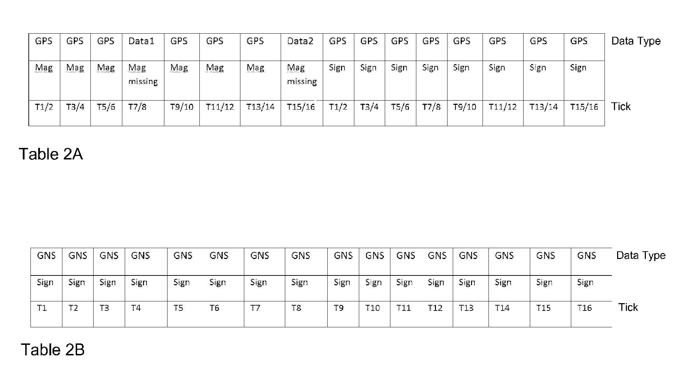

Embodiments of the invention will now be described by way of example with reference to the drawings in which:-
Figure 1 is a schematic block diagram of a GNSS recorder and player;
Table 2A shows a packing scheme for GPS signals; and
Table 2B shows a packing scheme for GLONASS signals.

It can be shown that replacing around 5% of the data bits in a GNSS signal, and inserting a suitable dummy bit for each one at playback, only degrades the signal to noise performance of a receiver using the played back signal by less than 0.1dB. Since the signal recording bandwidth is typically around 52Mbits/sec, this allows an additional data stream of up to 2.6Mbits/sec to be recorded within the data stream and streamed from a data port synchronously with the replayed GNSS signal. This bandwidth is sufficient for a considerable amount of data and even at least one video stream to be recorded simultaneously with the GNSS signal.

With reference to Figure 1, a GPS/Galileo downconvertor 2 and a GLONASS downconvertor 4 is shown. These are shown separately because these GNSS standards occupy different RF bands and this will typically have different downconvertor radio receiver architecture. A further downconvertor 6 is shown for other GNSS standard that may not easily fit within the receiver architecture used for GPS or GLONASS. It will be appreciated that the invention encompasses the use of a single downconvertor for a single GNSS standard as well as downconversion of multiple standards optionally using multiple downconvertors.

The downconvertors 2,4,6 receive a GNSS RF signal, for example directly from an antenna or plurality of antennas (to cover different frequency spectra), mix the signals down to an Intermediate Frequency (IF) and digitise the signal using analogue-to-digital convertors ADCs, ready for recording.

The additional data is collected from a data input port 8, on the record/replay device.

The data streams from the downconvertors are combined with the additional data in the data packer 10. Bits in the GNSS data stream used to house the additional data are lost. An example of a suitable packing format is shown in Tables 2A and 2B and is described in more detail below.

The combined GNSS and additional data is then stored in a data store 12, such as a hard disk or flash memory device.

At replay time a data unpacker 14 reads a pre-stored data stream from the data store 12, separates out the additional data from the GNSS data, into a plurality of data streams; one for each upconvertor 16, 18, 20 and one for an additional data output port 22 .

The missing signal bits are re-created using an algorithm that preserves the noise balance (note that for magnitude bits described in the example below, this is simply a "zero") and the signal streams are sent to a replay IF 24 and upconversion hardware 26 to recreate the GNSS signals.

### Example of Data Packing:

This is an example only and other formats and data rates are possible.
- GPS/Galileo data from downconvertor 2 is sampled in 2 bits (sign and magnitude) at a 13MHz rate. This is shown in Table 2A as "GPS".
- GLONASS data from downconvertor 4 is recorded in 1 bit (sign only) at a 26MHz rate. This is shown in Table 2B. This is shown in the table as "GNS".
- Additional Data is packed into the data stream as 2 data streams indicated as "Data 1" and "Data 2" in the tables.
- Each 26MHz tick is labelled T1, T2 etc. GLONASS occupies one tick, GPS 2 ticks since it is sampled at half the rate.

For each data stream, 1 bit is recorded every 16 ticks and thus at a rate of 1.625MHz or 1.625Mbit/s.

In total in the tables, 32 bits of data are encoded (additional data and GNSS streams) in 16 ticks at 26MHz. This is equivalent to a total data rate of 52Mbit/s or 6.5Mbyte/s.

The above example thus shows 2 synchronous data streams (Data1/Data2) recorded at 1.625Mbit/s and being packed into a 52Mbit/s GPS/GLONASS stream. Alternately a single data stream can be recorded at 3.25Mbit/s using the combined storage of two time samples e.g. at T7 and T15.

It will be appreciated that the player may be separate from the recorder so that, for example, a test system may be produced comprising the replay elements and a data store populated with pre-recorded or standardised test routes. Furthermore, the recorder may be separated for use, for example in a moving vehicle with the player being configured as lab equipment, the data being transferred between the two, for example using portable flash memory.

Furthermore, the invention is not intended to be limited for use with any particular GNSS standard or combination of standards.

In summary, the problem of recording and replaying additional data synchronously with GNSS data may be solved by providing:-
1. A radio receiver that implements downconversion of both GPS/Galileo and/or GLONASS or other bands preferably using a common local oscillator in order to generate digital data bits at a low Intermediate Frequency or at baseband for recording/saving on digital storage media.
2. A data interface able to accept additional data at the same time as the GNSS signal data is being recorded
3. A data combiner allowing data bits from the additional data stream to be inserted into the data being saved on the digital media
4. A replay function that reconstructs the additional data whilst replaying the GNSS data through a suitable upconverter to re-create the original GNSS signals, the additional data being provided on an external interface.

## Claims

1. A GNSS recorder comprising a radio receiver operable to downconvert a GNSS signal and to produce digital downconverted GNSS signal samples from the signal, storage means for storing the GNSS data samples, a data interface operable to receive additional data at the same time as the digital downconverted GNSS signal samples are being stored in the storage means, and a data combiner operable to pack the additional data into redundant areas of the stream of digital downconverted GNSS signal samples before storage in the storage means.

2. A GNSS recorder as claimed in claim 1, wherein the data combiner is operable to pack the additional data into the stream of digital downconverted GNSS signal samplesby replacing predetermined samples of the stream of digital downconverted GNSS signal sampleswith data from the additional data.

3. A GNSS signal generator comprising storage means operable to contain digital downconverted GNSS signal samples written by the GNSS recorder of claim 1, a data decoder operable to decode digital downconverted GNSS signal samples written by the GNSS recorder of claim 1, an upconverter operable to generate radio frequency GNSS signals based on digital downconverted GNSS signal samples decoded by the data decoder, and an additional data output operable to output additional data decoded by the data decoder synchronously with a decoded GNSS signal.

4. A GNSS recorder as claimed in claim 3, wherein the data decoder is operable to unpack the additional data from the stream of digital downconverted GNSS signal samples by locating the additional data and replacing them with data which maintains the noise envelope of the GNSS data stream prior to upconversion.
